# EUROPEAN PATENT APPLICATION

(11) **EP 2 083 461 A1**
(43) Date of publication of application: **29.07.2009**
(21) Application number: 06791150.3
(22) Date of filing: 29.09.2006
(51) Int. Cl.: H01M 2/02, B23K 26/00

(54) **BATTERY CASE AND BATTERY**

(71) Applicant: Shenzhen Bak Battery Co., Ltd, Longgang District Shenzhen Guangdong 518119 (CN)
(72) Inventor: MAO, Huanyu, Shenzhen Guangdong 518119 (CN); HUANG, Jiajun, Shenzhen Guangdong 518119 (CN); ZHENG, Rongpeng, Shenzhen Guangdong 518119 (CN); WU, Kang, Shenzhen Guangdong 518119 (CN); ZHANG, Jianwen, Shenzhen Guangdong 518119 (CN)
(74) Representative: Clegg, Richard Ian
(86) International application number: PCT/CN2006/002563
(87) International publication number: WO 2008/037121

(57) **Abstract**

A battery case including a cylindraceous body (1), a top lid plate (3) and a bottom lid plate (4), the top of the cylindraceous body (1) being open, the top lid plate (3) being fixed to the open of the top of the cylindraceous body (1) so as to cover the open, the said cylindraceous body (1) having a bottom which has a supporting table-board (8) having a open (2), the said bottom lid plate (4) being covered at the open (2) of the said supporting table-board (8). Further, the said open (2) is steppd or cone-shaped. Furthermore the bottom surface around the said open (2) is provided a first recess (12), a second recess (13) is provided on the outside surface of the said bottom lid (4) near the said open (2) at the bottom of the said cylindraceous body. Also a battery made of the said case is disclosed.

## Description

### FIELD OF THE INVENTION

The present invention relates to a battery case and a battery.

### BACKGROUND THE INVENTION

A lithium ion battery is of large capacity, high power, and mainly applied to a small device, particularly a mobile phone, laptop and portable electric tool. A lithium ion battery generally consists of a battery plate, a battery can, an electrolyte and a battery unit, wherein the battery unit can be formed by winding a positive plate, a cathode plate and a separator. The lithium ion battery, in the prior art, is generally packaged by the following steps: putting the winded battery unit into the battery can; then welding a connection belt between the positive plate and negative plate to the battery plate; then sealing the battery plate to an opening of the battery can by means of a laser welding process, and thereby forming a case containing the winded battery unit. In order to improve the welding process of lugs, an assembly process is well known in the art wherein a cylindrical case with openings both at its top and bottom is welded to the two cover plates, that is, terminals of a prepared battery unit is firstly electrically connected to the cover plates, and then the top cover plate and bottom cover plate are welded to the cylindrical body. Such an assembly process can solve the technical problem of welding the terminals to the battery case while resulting in the following problems. For example, during the assembly process, since the battery case has openings both at its top and bottom without any plate thereon, the battery unit, after disposed inside the battery case, tends to slide therein, and it is therefore hard to control the position of the battery unit therein. This causes difficulties to the assembly process, and even to the subsequent welding process of the battery plate.

### SUMMARY OF THE INVENTION

It is an object of the invention to provide a battery case and a battery to facilitate assembling and positioning a battery unit, and to prevent the battery unit from sliding in the case.

It is another object of the invention to provide a battery case and a battery which can improve the welding quality of cover plates and lower the leakage rate of the battery.

The above objects can be achieved by the following technical solutions.

A battery case comprises a cylindrical body, a top cover plate and a bottom cover plate. The cylindrical body comprises a top which is open and covered with the top cover plate fixed thereto. The cylindrical body further comprises a bottom configured to be a supporting surface having an opening configured to be covered with the bottom cover plate.

A battery comprises a cylindrical body, a battery unit, a top cover plate and a bottom cover plate. The cylindrical body comprises a top which is open and covered with the top cover plate fixed thereto. The cylindrical body further comprises a bottom configured to be a supporting surface having an opening, the battery is supported by the supporting surface, and the opening of the supporting surface is configured to be covered with the bottom cover plate.

Further, the opening of the supporting surface is configured to be a stepped opening, and the bottom cover plate is provided with a step along a periphery thereof so as to match the stepped opening of the supporting surface.

Further, the opening of the supporting surface is configured to be a conical opening, and the bottom cover plate is provided with a conical surface along a periphery thereof so as to match the conical opening of the supporting surface.

Further, the bottom cover plate is provided with a groove, and an inner diameter of the open top of the cylindrical body is greater than that of the cylindrical body, so that it is easy to position the top cover plate.

Further, a first groove is arranged on an exterior surface of the bottom surrounding the opening, and a second groove is arranged on an exterior surface of the bottom cover plate next to the opening of the bottom.

Further, the first groove is configured to be a continuous or discontinuous annular groove surrounding the opening, and the second groove is configured to be a continuous or discontinuous annular groove.

Further, the groove on the bottom is spaced from the opening in a distance one to three times the thickness of a wall of the cylindrical body, the second groove on the bottom cover plate is spaced from the opening of the bottom in a distance one to three times the thickness of the wall of the cylindrical body, the grooves each have a width one to three times the thickness of the wall of the cylindrical body, and the groove on the bottom has a depth one forth to one half of the thickness of a wall of the bottom.

Further, the first groove is filled with thermal-insulation materials, and the second groove is filled with thermal-insulation materials.

The following advantageous effects can be achieved by implementing the present invention.

1. Since the cylindrical body comprises a bottom configured to be a supporting surface having an opening, and the battery unit can be supported by the supporting surface, it avoids the battery unit from sliding in the cylindrical body during the assembly process and facilitates to position the same therein.

2. Since the strength of a cylindrical body with a bottom is greater than that of a cylindrical body without a bottom, the cylindrical body will not be deformed during the assembly process, and thus a subsequent shape rectification process is unnecessary.

3. The opening of the supporting surface is configured to be stepped or conical, so that it is possible to facilitate the assembly process and to allow an accurate positioning.

4. Since the air has a much lower heat conductivity than that of a metal, the provision of the first groove on the bottom and the provision of the second groove on the bottom cover plate can effectively prevent heat loss occurring in the welding region during a process of laser welding, so as to achieve a deeper welding penetration at a given laser intensity thus lowering welding deficiency greatly, so that the battery leakage rate is reduced.

5. The provision of the second groove on the bottom cover plate can promptly release the pressure and thus to prevent the battery from exploding.

6. The provision of the first groove which is discontinuous and annular on the bottom and/or the provision of the second groove which is discontinuous and annular on the bottom cover plate can effectively prevent the welding heat loss during a process of laser welding, and can ensure the strength of the bottom and/or bottom cover plate as well.

7. The groove of the bottom is designed to be spaced from the opening in a distance one to three times the thickness of a wall of the cylindrical body, and the groove of the bottom cover plate is designed to be spaced from the opening in a distance one to three times the thickness of a wall of the cylindrical body, so that both the difficulty of manufacturing process and the effect of preventing heat loss are taken into account. Specifically, a smaller distance (less than one times the thickness of the wall) can result in a difficult manufacturing process, and a larger distance (more than three times the thickness of the wall) can lead to heat loss.

8. Mainly considering the effect of preventing heat loss and the strength of the bottom and bottom cover plate, the groove of the bottom is designed to have a width one to three times the thickness of the wall of the cylindrical body and to have a depth one forth to one half of the thickness of a wall of the bottom cover plate. Too large width or depth of the grooves can greatly reduce the strength of the bottom and the bottom cover plate such that the case tends to be deformed. Otherwise, too small width or depth of the grooves can lead to heat loss.

9. Since the grooves are filled with thermal-insulation materials, the heat loss during a laser welding process is further reduced.

10. Due to the configuration of the cylindrical body with a bottom having an opening, an ultrasonic welding can be applied on lugs before the cover plates are placed, which may greatly facilitate the application of the ultrasonic welding of the lugs while improving the stability of the ultrasonic welding.

### DESCRIPTION OF THE DRAWINGS

Fig. 1 is a schematic view of a cylindrical battery.

Fig. 2 is a schematic view of the battery case in Fig. 1.

Fig. 3 is a schematic view of the bottom cover plate 4 in Fig. 1.

Fig. 4 is a section view taken along line A-A in Fig. 3.

Fig. 5 is a schematic view of another battery case.

Fig. 6 is a schematic view of still another battery case.

Fig. 7 is an enlarged view of the portion A in Fig. 6 with the bottom cover plate being removed.

Fig. 8 is a schematic view of yet another battery case.

Fig. 9 is an enlarged view of the portion B in Fig. 8 with the bottom cover plate being removed.

Fig. 10 is a bottom schematic view of the bottom cover plate in Fig. 8.

### DESCRIPTION OF THE EMBODIMENTS

Hereinafter, the present invention is illustrated in detail based on embodiments in connection with the accompanying drawings:

### Embodiment 1

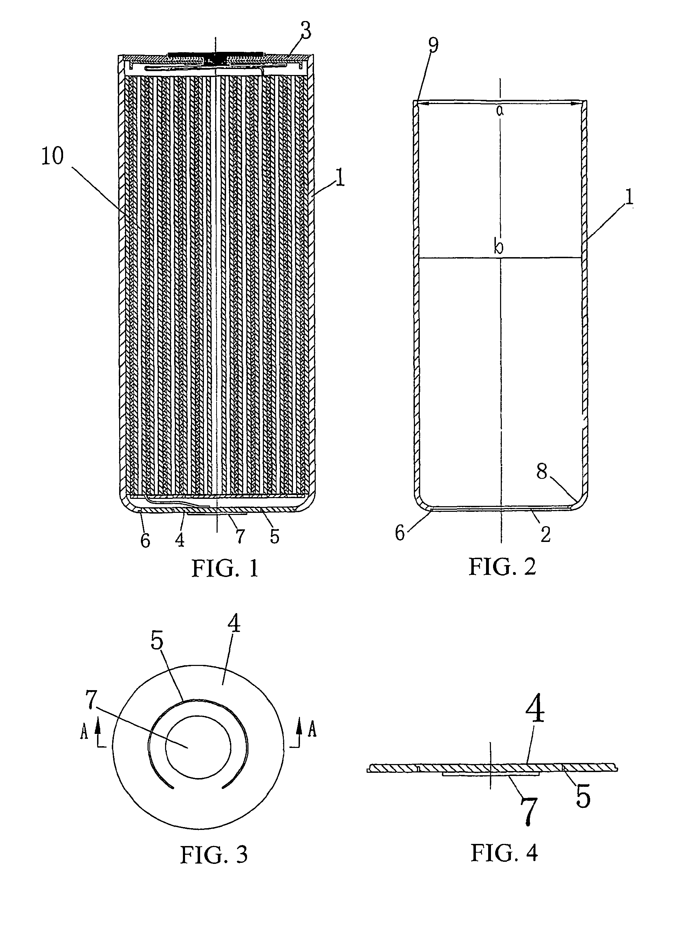

With reference to Figs. 1 to 4, a battery comprises a cylindrical body 1, a battery unit 10, a top cover plate 3 and a bottom cover plate 4. A top of the cylindrical body 1 is open and is formed with a step 9 so as to be engaged with the top cover plate 3. A bottom of the cylindrical body 1 is formed as a supporting surface 8 having a stepped opening 2 for supporting the battery unit 10. The bottom cover plate 4 may be provided with a step 6 along a periphery thereof so as to match the stepped opening 2. The bottom cover plate 4 also may be formed with a groove 5 for promptly releasing pressure so as to prevent the battery from exploding. The bottom cover plate 4 may be seal-welded to the stepped opening 2 of the supporting surface 8. Furthermore, an exterior surface of the bottom cover plate 4 may be coated with a layer of nickel 7 to facilitate welding a conductor thereon. The layer of nickel 7 may be replaced with a Nickel/Aluminum cladding strip. During a manufacturing process, the battery unit 10 may be disposed inside the cylindrical body 1 made of Aluminum, and then supported by the supporting surface 8. The battery unit may be provided with a positive terminal and a negative terminal. After the positive/negative terminals are electrically connected to the top cover plate 3 and the bottom cover plate 4, respectively, the battery unit may be sealed into the cylindrical body by welding the top cover plate 3 and bottom cover plate 4 thereto.

Since the bottom of the cylindrical body is formed with the supporting surface and the opening, such problems that the battery unit may slide in the cylindrical body 1 during the assembly process and it is hard to position the battery unit therein can be solved. Moreover, since the strength of a cylindrical body with a bottom is greater than that of a cylindrical body without the bottom, the cylindrical body would not deform during an assembly process, thus a subsequent shape rectification process is unnecessary. In addition, the groove provided on the bottom cover plate is able to release the pressure promptly and thus prevent the battery from exploding. The stepped shapes of the peripheries of the opening and bottom cover plate may facilitate the assembly process and result in an accurate positioning of the battery unit. Also, since the peripheries of the top of the cylindrical body and the top cover plate are provided with the stepped configurations, and the internal diameter at the opening of the cylindrical body is greater than that of the cylindrical body, it is easy to weld the top cover plate to the cylindrical body and to achieve an accurate positioning therebetween. The top and bottom cover plates are engaged with the cylindrical body in the above-mentioned manner, so that the battery may be sealed by a standing welding. The structure of clamps used in the standing welding is simple and the welding quality is high. Due to the configuration of the cylindrical body with the opening at the bottom, an ultrasonic welding can be applied on lugs before the cover plates are placed, which may greatly facilitate the application of the ultrasonic welding of the lugs while improving the stability of the ultrasonic welding.

The manufacturing process of said battery case is as follows: the cylindrical body made of aluminum may be formed by a punching process. The punching process comprises the following steps: (1) cutting a substrate into a disc; (2) drawing the disc into a cylindrical body having a bottom and a required shape; (3) punching the bottom of the cylindrical body to form a through hole; and (4) punching the periphery of the through hole to form a step. The steps of cutting and drawing are conventional processes. The step on the bottom is formed by punching the bottom of the cylindrical body to form a hole, followed by punching the bottom to form the step, and then trimming the punched stepped hole to achieve a predetermined shape.

### Embodiment 2

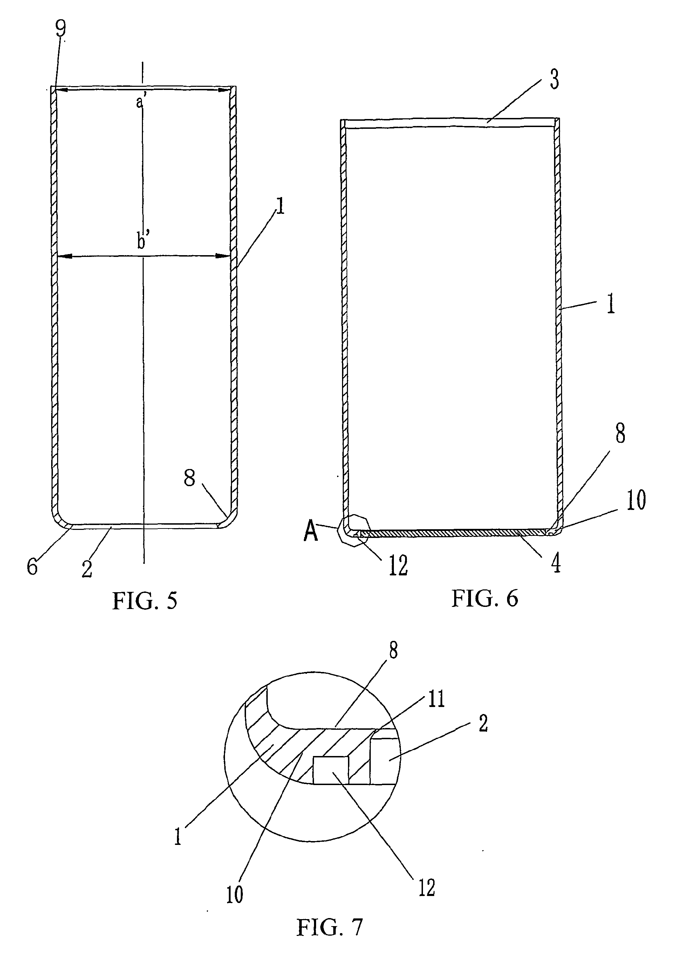

Another embodiment of the battery case is shown in Fig. 5, in which a cylindrical body 1 may be provided with a supporting surface 8 having a conical opening 2, and a bottom cover plate 4 may be accordingly provided with a conical surface 6 at the periphery thereof (not shown) to match the conical opening 2.

### Embodiment 3

Yet another embodiment of a battery case is shown in Figs.6 and 7. The battery case comprises a cylindrical body 1, a top cover plate 3 and a bottom cover plate 4. The cylindrical body 1 may be provided with an opening at a top thereof. The top of the cylindrical body 1 is covered with the top cover plate 3. A bottom 10 of the cylindrical body 1 may have a supporting surface 8, a through hole 2 and a first groove 12 formed along the periphery of the through hole 2 on an exterior surface of the bottom 10. The first groove 12 may be configured to be a continuous annular groove. The through hole 2 may have a conical surface 11 such that the opening of the through hole 2 may be substantially conical. The periphery of the bottom cover plate 4 may be shaped to match the through hole 2, and the bottom cover plate 4 may be seal-welded to the through hole 2 of the bottom 10.

The provision of the first groove has the following advantages. (1) Since the air has a much lower heat conductivity than that of a metal, the heat loss in the welding region during a process of laser welding can be effectively prevent. Further, a deeper welding penetration at a given laser intensity and thus a much lower welding deficiency can be achieved, so that the battery leakage rate is reduced. (2) After the battery is assembled with the battery case, due to the existence of the first groove, the pressure of the battery can be released promptly and thus explosion of the battery can be prevented.

In this embodiment, a wall of the battery case may have a thickness of 0.3mm, the bottom of the cylindrical body 1 may have a thickness of 0.8mm, and the first groove 12 may be spaced from to the through hole in a distance of 0.3mm and have a width of 0.9mm and a depth of 0.2mm.

### Embodiment 4

A battery case according to still another embodiment may have the same configuration as that of the embodiment 3, except that a first groove may be spaced from a through hole in a distance of 0.9mm, and may have a width of 0.3mm and a depth of 0.4mm.

### Embodiment 5

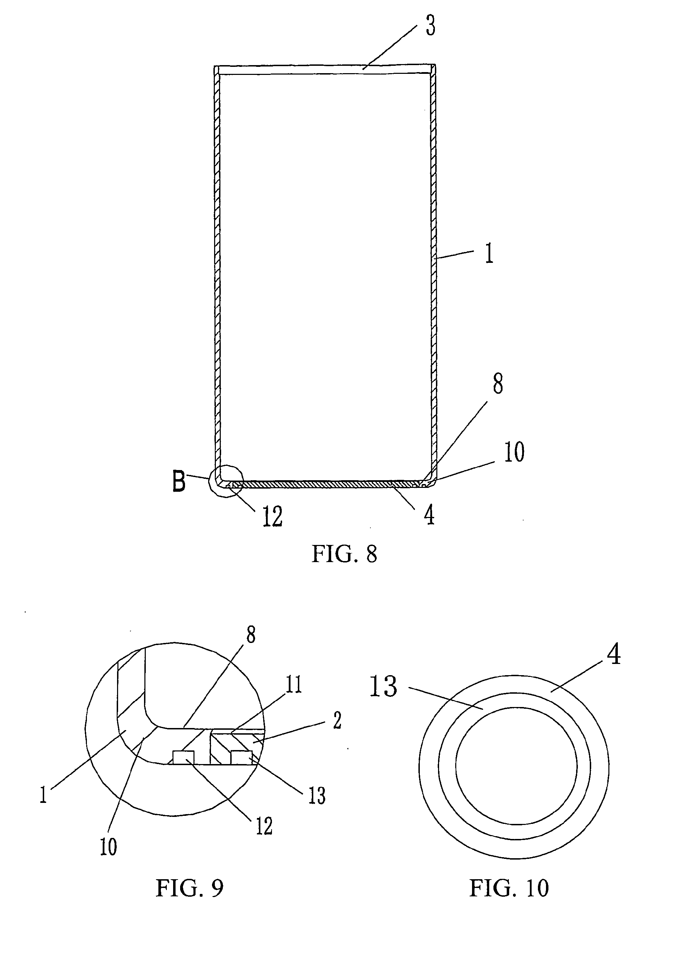

Still another embodiment of battery case is shown in Figs. 8-10. The battery case comprises a cylindrical body 1, a top cover plate 3 and a bottom cover plate 4. The cylindrical body 1 may be provided with an opening at a top thereof. The top of the cylindrical body 1 is covered with the top cover plate 3. A bottom 10 of the cylindrical body 1 may have a supporting surface 8, a through hole 2 and a first groove 12 arranged along the periphery of the through hole 2 on an exterior surface of the bottom 10. The first groove 12 may be a continuous annular groove. The through hole 2 may have a conical surface 11 therein such that the opening of the through hole 2 may be substantially conical. A periphery of the bottom cover plate 4 may be shaped to match the through hole 2. A second groove 13 may be formed on the bottom cover plate 4 next to the through hole 2. The second groove 13 may be a continuous annular groove. The bottom cover plate 4 may be seal-welded to the through hole 2 of the bottom 10.

The provision of the first and second grooves has the following advantages. (1) Since the air has a much lower heat conductivity than that of a metal, the heat loss in the welding region during a process of laser welding can be effectively prevent. Further, a deeper welding penetration at a given laser intensity and thus a much lower welding deficiency can be achieved, so that the battery leakage rate is reduced. (2) After the battery is assembled with the battery case, due to the existence of the first and second grooves, the pressure of the battery can be released promptly and thus explosion of the battery can be prevented.

In this embodiment, the first groove on the bottom may be spaced from the through hole at a distance of 0.6mm, and may have a width of 0.6mm and a depth of 0.6mm; and the second groove arranged on the bottom cover plate may be spaced from the through hole at a distance of 0.6mm, and may have a width of 0.6mm and a depth of 0.35mm.

### Comparison Experiment

Forty thousand of batteries are manufactured in the same manufacturing process, ten thousand of which are manufactured according to the embodiments 1, 3, 4 and 5, respectively. All the batteries are tested after being reserved for one month, and the statistical test results are as follows:

**Table 1. Leakage Rate for Batteries with Various Case Configurations**

| Configuration | Embodiment 1 | Embodiment 3 | Embodiment 4 | Embodiment 5 |
|---|---|---|---|---|
| Leakage Rate | 15% | 0.4% | 0.8% | 0.45% |

From the Table 1, it is apparent that, since the grooves are provided both on the bottom of the battery case and on the bottom cover plate, a welding penetration at a given laser intensity is deeper and the welding deficiency is significantly reduced so that the leakage rate of the batteries is reduced noticeably. Especially, the provision of the groove on the bottom cover plate may cause a more obvious effect.

It should be noted that, the present invention is illustrated by way of preferred embodiments, which are only visual examples for helping understanding, and should not be construed as limitation thereto. Similarly, according to the description on the invention and the preferred examples, various possible equivalent modifications or substitutions can be made, which should be comprised within the scope of the invention. For example, the first and second grooves can also be configured to be discontinuous annular grooves instead of continuous annular grooves. In this case, the broken portion of the annular groove can reinforce the strength. Further, the first and second grooves can also be filled with thermal-insulation materials so as to effectively prevent the heat loss in the welding region during the process of laser welding to achieve a deeper welding penetration at a given laser intensity. Thus, the leakage rate can be further reduced.

## Claims

1. A battery case, comprising a cylindrical body, a top cover plate and a bottom cover plate, wherein the cylindrical body comprises a top which is open and covered with the top cover plate fixed thereto, and wherein the cylindrical body further comprises a bottom configured to be a supporting surface having an opening, and the opening of the supporting surface is configured to be covered with the bottom cover plate.

2. The battery case according to claim 1, wherein the opening of the supporting surface is configured to be a stepped opening, and the bottom cover plate is provided with a step along a periphery thereof so as to match the stepped opening of the supporting surface.

3. The battery case according to claim 1, wherein the opening of the supporting surface is configured to be a conical opening, and the bottom cover plate is provided with a conical surface along a periphery thereof so as to match the conical opening of the supporting surface.

4. The battery case according to claim 1, wherein a first groove is arranged on an exterior surface of the bottom surrounding the opening.

5. The battery case according to claim 4, wherein the first groove is configured to be a continuous annular groove surrounding the opening.

6. The battery case according to claim 5, wherein the first groove on the bottom is spaced from the opening in a distance one to three times the thickness of a wall of the cylindrical body.

7. The battery case according to claim 4, wherein the first groove is configured to be a discontinuous annular groove surrounding the opening.

8. The battery case according to one of claims 1 to 7, wherein a second groove is arranged on an exterior surface of the bottom cover plate next to the opening of the bottom.

9. The battery case according to claim 8, wherein the second groove is configured to be a continuous annular groove.

10. The battery case according to claim 9, wherein the second groove on the bottom cover plate is spaced from the opening of the bottom in a distance one to three times the thickness of the wall of the cylindrical body.

11. The battery case according to claim 10, wherein the grooves each have a width one to three times the thickness of the wall of the cylindrical body, and the groove on the bottom has a depth one forth to one half of the thickness of a wall of the bottom.

12. The battery case according to claim 8, wherein the second groove is configured to be a discontinuous annular groove surrounding the opening.

13. The battery case according to one of claims 3 to 7, wherein the first groove is filled with thermal-insulation materials.

14. The battery case according to claim 8, wherein the first groove is filled with thermal-insulation materials, and the second groove is filled with thermal-insulation materials.

15. A battery, comprising a cylindrical body, a battery unit, a top cover plate and a bottom cover plate, wherein the cylindrical body comprises a top which is open and covered with the top cover plate fixed thereto, and wherein the cylindrical body further comprises a bottom configured to be a supporting surface having an opening, the battery unit is supported by the supporting surface, and the opening of the supporting surface is configured to be covered with the bottom cover plate.

16. The battery according to claim 15, wherein a first groove is arranged on an exterior surface of the bottom surrounding the opening.

17. The battery according to claim 16, wherein a second groove is arranged on an exterior surface of the bottom cover plate next to the opening of the bottom.

18. The battery according to claim 17, wherein the first groove is configured to be a continuous or discontinuous annular groove surrounding the opening, and the second groove is configured to be a continuous or discontinuous annular groove.

19. The battery according to claim 17, wherein the first groove is filled with thermal-insulation materials, and the second groove is filled with thermal-insulation materials.

20. The battery according to claim 17, wherein the groove on the bottom is spaced from the opening in a distance one to three times the thickness of a wall of the cylindrical body, the second groove on the bottom cover plate is spaced from the opening of the bottom in a distance one to three times the thickness of the wall of the cylindrical body, the grooves each have a width one to three times the thickness of the wall of the cylindrical body, and the groove on the bottom has a depth one forth to one half of the thickness of a wall of the bottom.
